# EUROPÄISCHE PATENTANMELDUNG

(11) **EP 0 574 770 A1**
(43) Veröffentlichungstag der Anmeldung: **22.12.1993**
(21) Anmeldenummer: 93108867.8
(22) Anmeldetag: 02.06.1993
(51) Int. Cl.: F16J 15/08

(54) **Metallische Flachdichtung**

(30) Priorität: 16.06.1992 DE 4219709
(71) Anmelder: REINZ-DICHTUNGS-GMBH, D-89233 Neu-Ulm (DE)
(72) Erfinder: Weiss, Alfred, W-7910 Neu-Ulm (DE); Hieble, Franz, W-7913 Senden/Aufheim (DE); Katzmaier, Hans, W-7901 Beimerstetten (DE); Unseld, Günter, W-7901 Neenstetten (DE)
(74) Vertreter: Weber, Otto Ernst, Dipl.-Phys.

(57) **Zusammenfassung**

Es wird eine metallische Flachdichtung, insbesondere eine Zylinderkopfdichtung mit mindestens einem gesickten Dichtungsblech und einem Stützblech beschrieben, welche wenigstens eine Durchgangsöffnung umgeben. An den die Durchgangsöffnung umgebenden Rand des Dichtungsbleches ist eine Sicke angeformt, die im Kraftnebenschluß gehalten ist. Zu diesem Zweck ist der den freien Schenkel der Sicke abstützende Bereich des Trägerblechs dünner oder dicker als der übrige Bereich. Er hat bevorzugt eine topografisch frei gewählte Form und/oder verschiedene Breiten entlang des Umfangs der Durchgangsöffnung. Eine Materialverstärkung wird dadurch erreicht, daß das Trägerblech mit einer Ausnehmung versehen und ein beispielsweise durch einen Falz oder Bördel gebildeter Metallring eingelegt wird.

## Beschreibung

Die Erfindung betrifft eine metallische Flachdichtung, insbesondere eine Zylinderkopfdichtung, mit einem im wesentlichen flachen, mindestens ein gesicktes Dichtungsblech aufweisenden Dichtungskörper, wie sie in den Oberbegriffen der unabhängigen Patentansprüche beschrieben ist.

Da der Dichtspalt zwischen dem Zylinderkopf und dem Zylinderblock einer Brennkraftmaschine durch Innendruck und Temperaturschwankungen oszilliert und dadurch ein Dichtungselement ständigen Pressungsänderungen unterworfen wird, sollte die Dichtung möglichst gute und dauerhafte Federungseigenschaften besitzen. Durch die Ausformung von Sikken soll eine ausreichende Elastizität erreicht werden, um eine dauerhafte Abdichtung der verschiedenen Betriebsmedien zu gewährleisten.

Um diese Elastizität auf Dauer sicherstellen zu können, dürfen die Sicken weder im Einbauzustand der Dichtung noch im Betriebszustand mit den diversen dynamischen Belastungen völlig plattgedrückt werden.

Aus der auf die Anmelderin zurückgehenden DE-OS 38 35 611 ist bekannt, die Sicke mit einer geringeren Dicke als den Dichtungskörper auszubilden und sie vom Dichtungskörper zu ihrem freien Rand hin zu verjüngen. Im entspannten Zustand ragt die Sicke mit wenigstens einer konvexen Aufwölbung über den von den beiden Dichtflächen definierten Raum hinaus.

Es ist auch bekannt, unter dem Dichtungsblech ein dünnes Blech als Zwischenlage einzusetzen und im Bereich der Sikken umzufalzen. Dadurch erhält man einen Vorsprung in Höhe der Blechdicke, welche verhindert, daß die Sicke plattgedrückt werden kann. Als nachteilig ist dabei anzusehen, daß der Vorsprung bei allen abzudichtenden Bohrungen systembedingt gleich hoch ist, so daß eine wünschenswerte gezielte Flächenpressungsabstimmung ausgeschlossen ist, welche die Voraussetzung für die Abdichtung unter verschiedenen konstruktiven Gegebenheiten ist. Würde man andererseits versuchen, unterschiedliche Blechdicken innerhalb eines Dichtungskörpers zu verwenden, so wäre dies unökonomisch.

Der Erfindung liegt die **Aufgabe** zugrunde, eine Flachdichtung der eingangs genannten Art zu schaffen, das Plattdrücken der Sicke auszuschließen und gleichzeitig eine zuverlässige und ökonomische Abdichtung unter verschiedenen konstruktiven Gegebenheiten zu gewährleisten.

Diese Aufgabe wird gemäß den kennzeichnenden Teilen der unabhängigen Ansprüche gelöst.

Die Erfindung hat den Vorteil, daß an einem einzigen Durchgang oder an verschiedenen Durchgängen der gleichen Dichtung unterschiedlich hohe Vorsprünge zur Abstützung der Sicke erzeugt und so gezielt unterschiedliche Flächenpressungen eingestellt werden können, die über die gesamte Einsatzdauer der Dichtung unverändert beibehalten werden. Die Erfindung schafft die Voraussetzung für eine große Flexibilität in der Ausgestaltung und Feinabstimmung der Sickenabstützung und als Folge davon der Flächenpressungsverteilung über die gesamte Dichtung.

Eine bevorzugte Weiterbildung der Erfindung besteht darin, daß der den freien Schenkel abstützende erste Bereich eine topografisch frei gewählte Form und/oder variable Breite entlang des Umfangs der Durchgangsöffnung bzw. über die Länge der Seite aufweist.

Bevorzugte andere Weiterbildungen der Erfindung sind in den Unteransprüchen beschrieben.

Nachfolgend wird die Erfindung anhand von in der Zeichnung dargestellten Ausführungsbeispielen weiter beschrieben.

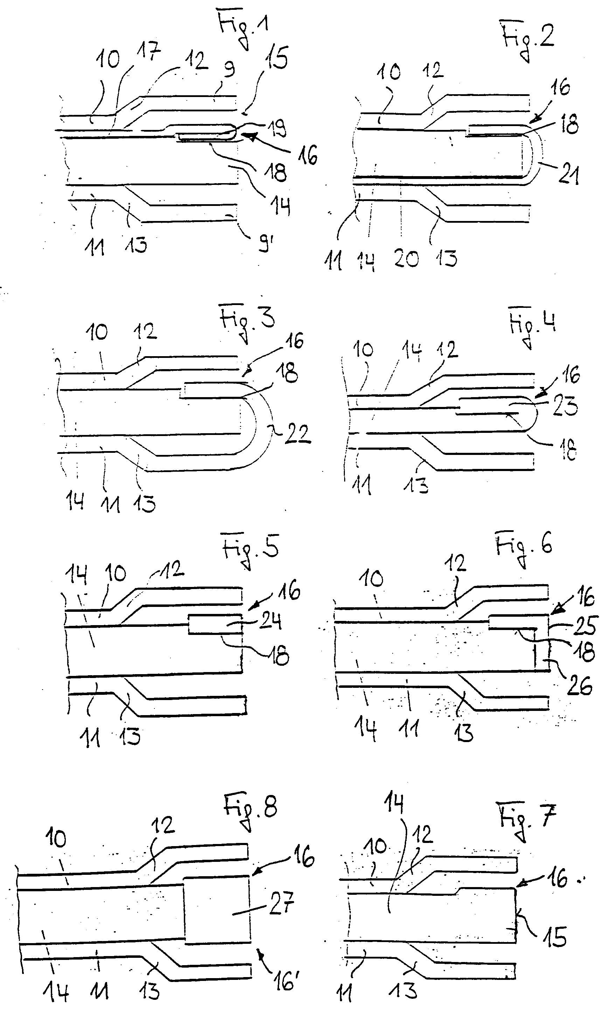

Die Fig. 1 bis 23 zeigen anhand jeweils eines Beispiels schematisch einen Querschnitt durch einen Rand einer Durchtrittsöffnung einer Metall-Flachdichtung.

In der nachfolgenden Beschreibung sind gleiche Teile jeweils mit gleichen Bezugszeichen versehen. Die anhand einer speziellen Figur gegebene Beschreibung dieser Teile trifft daher auch auf alle anderen betreffenden Figuren zu, auch wenn keine gesonderte diesbezügliche Figurenbeschreibung vorhanden ist.

Fig. 1 veranschaulicht einen Querschnitt durch eine Zylinderkopfdichtung im Bereich einer Öffnungskante 15 einer Durchgangsöffnung. Die Zylinderkopfdichtung umfaßt ein kopfseitiges gesicktes Dichtungsblech 10, welches im eingebauten Zustand einem Zylinderkopf (nicht dargestellt) zugewandt ist, ein blockseitiges Dichtungsblech 11, welches im eingebauten Zustand einem Motorblock (nicht dargestellt) zugewandt ist sowie zwei Blechlagen, bestehend aus einem Trägerblech 14 und einem im Vergleich zum Trägerblech 14 dünnen Zwischenblech 17 zwischen dem Trägerblech 14 und dem kopfseitigen Dichtungsblech 10.

Die beiden Dichtungsbleche 10,11 sind jeweils mit einer Sicke 12, 13 versehen, deren freie Schenkel 9,9' zum Trägerblech 14 bzw. Zwischenblech 17 in der entspannten Stellung beabstandet sind. Unterhalb des freien Schenkels 9 der kopfseitigen Sicke 12 ist eine Materialverstärkung 16 vorhanden, mit welcher die Sicke 12 in den Kraftnebenschluß gelegt wird. Wenn sie im Einbauzustand oder im Betriebszustand mit den diversen dynamischen Belastungen beaufschlagt wird, verhindert die Materialverstärkung 16, daß die Sicke 12 völlig plattgedrückt wird.

Im Ausführungsbeispiel gemäß Fig. 1 wird die Materialverstärkung dadurch erreicht, daß einerseits eine ringförmige Ausnehmung 18 im Trägerblech 14 vorhanden ist und andererseits am Zwischenblech 17 eine Auffütterung konstanter Dikke in Form eines Falzes 19 angebracht ist, der im Bereich der Ausnehmung 18 zu liegen kommt. Durch die Wahl der Tiefe der Ausnehmung 18 kann jede gewünschte wirksame Materialverstärkung 16 erreicht werden, wobei als wirksame Materialverstärkung der Niveauunterschied zwischen den Oberseiten des Falzes 19 und dem unverstärkten Zwischenblech 17 verstanden wird. Die Tiefe der Ausnehmung 18 kann hierbei über ihren Umfang entlang der Öffnungskante unterschiedlich sein, so daß gezielt eine unterschiedliche Flächenpressung und damit eine optimale Flächenpressungsverteilung eingestellt wird, welche den konstruktiven Gegebenheiten, beispielsweise einer Zylinderkopfdichtung, Rechnung trägt.

Gemäß Fig. 2 wird die Materialverstärkung 16 dadurch erreicht, daß ein anderes Zwischenblech 20 zwischen dem Trägerblech 14 und dem blockseitigen Dichtungsblech 11 angeordnet und mit einem Bördel 21 so um das Trägerblech 14 herumgebogen ist, daß der Bördel (21) unter Bildung der Auffütterung in der Ausnehmung 18 zu liegen kommt. Die Höhe der Materialverstärkung 16 ergibt sich bei diesem Beispiel aus der Differenz von Blechstärke des Zwischenblechs 20 und der Tiefe der Ausnehmung 18.

In Fig. 3 ist ein Beispiel veranschaulicht, bei welchem die Materialverstärkung 16 durch einen Bördel 22 des blockseitigen Dichtungsblechs 11 erzeugt wird, wobei der freie Schenkel des Bördels 22 in der Ausnehmung 18 liegt.

Gemäß Fig. 4 ist das Trägerblech 14 selbst an seinem freien Ende mit einem Falz 23 versehen, wobei die Stärke des Trägerblechs 14 im Bereich des Falzes 23 kleiner ist als im übrigen Bereich und sich die Materialverstärkung 16 aus der Verdoppelung des Blechquerschnitts ergibt.

Die Materialverstärkung 16 gemäß Fig. 5 erhält man durch eine Blecheinlage, z. B. einen Metallring 24, der in der vorgeprägten Ausnehmung 18 liegt. Beim Beispiel gemäß Fig. 6 ist ein Ring 25 mit einem Kragen 26 versehen, welcher die Stirnseite des Trägerblechs 14 abdeckt.

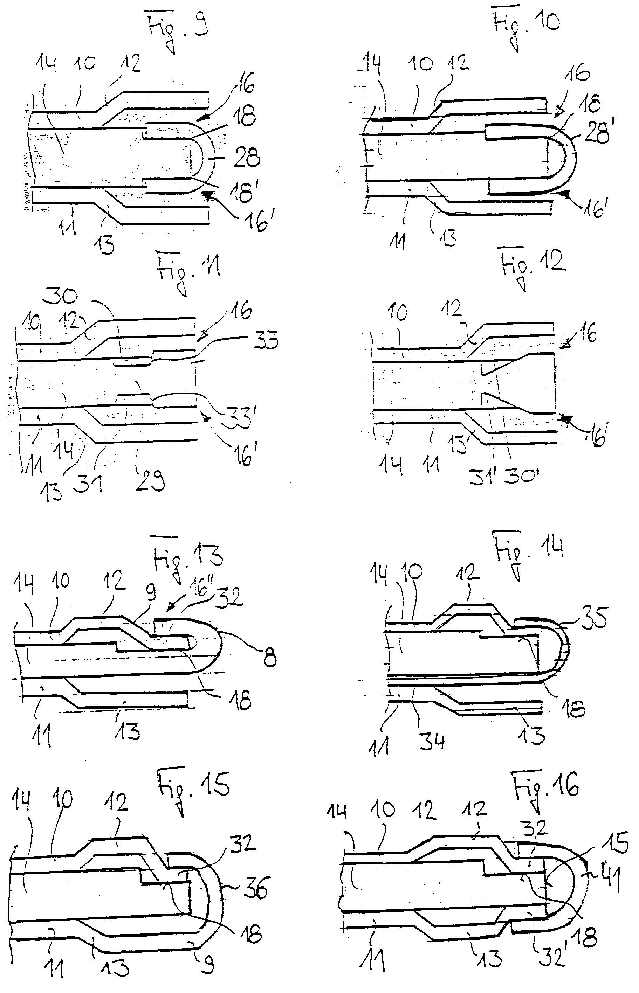

Wie die Fig. 7 zeigt, kann als weitere Alternative zur Erzeugung der Materialverstärkung 16 das Trägerblech 14 von der Öffnungskante 15 her angestaucht werden.

Die vorstehenden Beispiele wurden im Zusammenhang mit einer kopfseitigen Materialverstärkung beschrieben. Es ist in gleicher Weise möglich, diese asymmetrischen Anordnungen so auszubilden, daß die Materialverstärkung blockseitig liegt.

In den folgenden Figuren 8 bis 12 werden Varianten veranschaulicht, bei welchen sowohl die blockseitige als auch die kopfseitige Sicke 12,13 im Nebenschluß liegen, d.h. es ist sowohl eine Materialverstärkung 16 in Richtung auf das kopfseitige Dichtungsblech 10 als auch eine Materialverstärkung 16' in Richtung auf das blockseitige Dichtungsblech 11 vorhanden, die unterschiedlich sein können. Gemäß Fig. 8 werden diese beiden Verstärkungen 16,16' mit einem Ring 27 erzeugt, dessen Überstände über die Ober- und Unterseite des Trägerblechs 14 zur Erzeugung der gewünschten Nebenschlüsse gewählt sind. Die Überstände können dabei unterschiedlich groß und/oder topografisch ausgeformt sein, was auch für alle folgenden asymmetrischen Beispiele gilt.

In Fig. 9 ist das Trägerblech 14 mit zwei Ausnehmungen 18, 18' versehen, in welchen die Schenkel eines um die Stirnseite des Trägerblechs 14 herumgeführten U-Bördels 28 liegen.

In Fig. 10 ist ein U-Bördel 28' an der Öffnungskante angeordnet, dessen kopfseitiger Schenkel in der Ausnehmung 18 und dessen blockseitiger Schenkel auf der nicht mit einer Ausnehmung versehenen blockseitigen Oberfläche des Trägerblechs 14 liegt.

Gemäß Fig. 11 und 12 sind die kopf- und blockseitigen Materialverstärkungen 16,16' durch Fließpressen des Trägerblechs 14 erzeugt. Unter Bildung einer Querschnittsverengung 29 durch kopf- und blockseitige Einprägungen 30,31 erhält man gezielt die gewünschten Materialverstärkungen 16,16' an der Brennraumkante 15. Die Einprägungen 30,31 sind nach Form und Tiefe frei wählbar, so daß die daraus resultierenden Materialverstärkungen 16,16' gezielt erzeugt werden können. Beispielsweise sind die Einprägungen 30,31 in Fig. 11 trapezförmig mit relativ steilen Kanten 33,33' zu den Materialverstärkungen 16,16'.
In Fig. 12 sind die Einprägungen 30',31' dreieckförmig mit einem flachen Anstieg zu den Materialverstärkungen 16,16'.

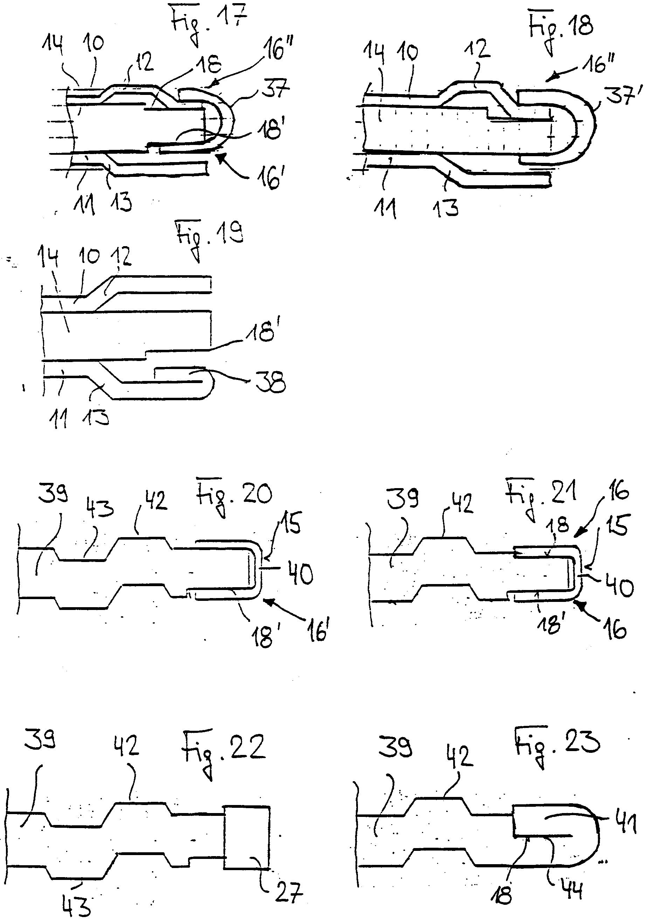

Bei den Beispielen einer Flachdichtung, die in den Figuren 13 bis 19 beschrieben sind, wird ein Kraftnebenschluß der kopfseitigen Sicke 12 oder der blockseitigen Sicke 13 (Figur 19) dadurch erreicht, daß der freie Schenkel des gesickten Dichtungsbleches 10 in der Ausnehmung 18,18' zu liegen kommt. Diese Maßnahme kann mit den vorstehend beschriebenen Maßnahmen kombiniert sein, wie beispielsweise in den Figuren 17 und 18 gezeigt ist.

Gemäß Fig. 13 wird ein im Querschnitt verringertes und ggf. topografisch unter Bildung der Ausnehmung 18 vorgeformtes Trägerblech 14 um den Fußpunkt 32 des freien Schenkels 9 der kopfseitigen Sicke 12 herumgebördelt. Der freie Schenkel 9 ist somit tiefer abgestützt als der andere Sickenschenkel und er wird darüber hinaus in seinem Fußpunkt 32 vom Bördel 8 gehalten. Die Materialverstärkung 16'', welche ein Plattdrücken der Sicke 12 verhindert, wird durch die Höhendifferenz der Oberflächen des Dichtungsblechs 10 und des Bördels 8 bestimmt.

Beim Beispiel gemäß Fig. 14 befindet sich ein Zwischenblech 34 zwischen dem Trägerblech 14 und dem blockseitigen Dichtungsblech 11. Ein umgebördelter Rand 35 des Zwischenblechs 34 hält den freien Fuß der kopfseitigen Sicke 12 in der Ausnehmung 18.

Bei der Variante gemäß Fig. 15 ist eine Verlängerung 36 des freien Schenkels 9 der blockseitigen Sicke 13 um das Trägerblech 14 und den Fußpunkt 32 der kopfseitigen Sicke 12 herumgebördelt.

Gemäß Fig. 16 ist ein hier im Beispiel gleichschenkeliger U-Bördel 41 an den freien Fußpunkten der kopf- und blockseitigen Sicken 12,13 von der Öffnungskante 15 her angebracht, wobei der kopfseitige Fußpunkt 32 in der Ausnehmung 18 liegt und der blockseitige Fußpunkt 32' auf der planen blockseitigen Oberfläche des Trägerblechs 14 zu liegen kommt.

In einer weiteren Variante, die Fig. 17 zeigt, befinden sich an der Kopf- und Blockseite des Trägerblechs 14 Ausnehmungen 18,18'. In der kopfseitigen Ausnehmung 18 ist der freie Fußpunkt der kopfseitigen Sicke 12 abgestützt. In der blockseitigen Ausnehmung 18' liegt ein Schenkel eines U-Bördels 37, welcher aufgrund seiner Materialstärke aus der blockseitigen Ausnehmung 18' heraussteht und somit unter Bildung einer Materialverstärkung 16' den freien Schenkel der blockseitigen Sicke 13 in den Nebenschluß legt. Der andere Schenkel des Bördels 37 hält wie in den vorstehenden Beispielen den Fußpunkt 32 der kopfseitigen Sicke 12 und bildet die gewünschte Auffütterung.

Das Beispiel gemäß Fig. 18 unterscheidet sich von dem nach Fig. 17 dadurch, daß der blockseitige Schenkel des Bördels 37' auf der Blockseite des Trägerblechs 14 zu liegen kommt, wobei auf der Blockseite keine Ausnehmung vorhanden ist.

Fig. 19 zeigt ein Beispiel mit einer blockseitigen Ausnehmung 18'. Der zugehörige freie Schenkel der blockseitigen Sicke 13 ist in der Weise umgefalzt, daß der Falz 38 hier im Beispiel im unbelasteten Zustand in einem vorgegebenen Abstand von der Ausnehmung 18' und im belasteten Zustand in der Ausnehmung 18' liegt.

Soweit die vorstehenden Beispiele gemäß Fig. 8 bis 19 asymmetrisch bezüglich Kopf- und Blockseite sind, können die Ausführungen bezüglich Kopf- und Blockseite bei Bedarf vertauscht werden.

Bei den in den Fig. 20 und 21 dargestellten Dichtungen ist ein einziges Dichtungsblech 39 mit Sicken 42,43 vorhanden, welches eine geprägte Ausnehmung 18,18' aufweist. Sie wirkt mit einem U-Bördel 40 zusammen, der auf den Blechrand aufgebracht ist (Fig. 20, Fig. 21) und erzeugt auf diese Weise die gewünschten Materialverstärkungen 16,16'entlang der Öffnungskante 15.

Alternativ ist gemäß Fig. 22 auf die Dichtung stirnseitig ein Ring 27 mit größerer Dicke als das Dichtungsblech 39 eingesetzt.

Bei der einstückigen Variante gemäß Fig. 23 ist das freie Ende des Bleches 39 zunächst durch eine Vorprägung 44 verdünnt und unter Bildung eines Falzes 41 umgelegt.

Für alle vorbeschriebenen Beispiele gilt, daß die Ausnehmungen 18 sowie die erzeugten Materialverstärkungen 16,16' eine topografisch frei gewählte Form und unterschiedliche Breiten aufweisen können, wobei die Höhe der erwünschten Vorsprünge durch den Betrag der Vorprägungen bzw. Ausnehmungen bestimmt wird. Es ist daher sehr leicht möglich, innerhalb der gleichen Dichtung unterschiedliche Materialverstärkungen 16,16' zu erzielen.

Die einzelnen Blechlagen können innerhalb einer Dichtung aus gleichen oder unterschiedlichen Werkstoffen, vorzugsweise Baustahl, verzinktem Baustahl, aluplattiertem Baustahl, Federstahl, hitzebeständigem Stahl, Edelstahl, wärmebehandeltem Stahl, Stahlguß, Kupfer oder Aluminium bestehen und Dicken von 0,05 bis 2,5 mm aufweisen. Darüber hinaus können sie zur Mikroabdichtung ein oder beidseitig mit Gummi, vorzugsweise NBR, FPM, ACM, MVQ oder PU in der Dicke von 5 bis 10 µm, vorzugsweise 20 bis 50 µm, beschichtet sein.

## Patentansprüche

1. Metallische Flachdichtung, insbesondere Zylinderkopfdichtung, mit mindestens einem ein gesicktes Dichtungsblech und ein Trägerblech aufweisenden Dichtungskörper, dessen Oberflächen zwei zueinander parallele Dichtflächen bilden, welche wenigstens eine Durchgangsöffnung umgeben,
dadurch **gekennzeichnet,**
daß der den freien Schenkel (9,9')der Sicke (12,13) abstützende Bereich des Trägerblechs (14) dünner ist als der übrige Bereich,
daß der dünnere Bereich zur Erzielung einer vorgegebenen Flächenpressung in Verbindung mit einer Auffütterung konstanter Dicke ausgeformt ist, und daß die Auffütterung bezüglich des unverdünnten Bereichs des Trägerblechs (14) eine Materialverdickung (16,16',16'') bildet.

2. Metallische Flachdichtung, insbesondere Zylinderkopfdichtung, mit mindestens einem ein gesicktes Dichtungsblech und ein Trägerblech aufweisenden Dichtungskörper, dessen Oberflächen zwei zueinander parallele Dichtflächen bilden, welche wenigstens eine Durchgangsöffnung umgeben,
dadurch **gekennzeichnet,**
daß der den freien Schenkel (9,9') der Sicke (12, 13) abstützende Bereich des Trägerblechs (14) zur Erzielung einer vorgegebenen Flächenpressung dicker ist als der übrige Bereich.

3. Metallische Flachdichtung nach Anspruch 1,
dadurch **gekennzeichnet,**
daß der den freien Schenkel (32) der Sicke (12,13) abstützende Bereich des Trägerblechs (14) eine topografisch frei gewählte Form und/oder verschiedene Breiten aufweist.

4. Metallische Flachdichtung nach Anspruch 1,
dadurch **gekennzeichnet,**
daß die Auffütterung durch einen Falz oder Bördel einer Blechlage gebildet wird.

5. Metallische Flachdichtung nach Anspruch 2 oder 3,
dadurch **gekennzeichnet,**
daß der den freien Schenkel (32) der Sicke (12,13) abstützende Bereich des Trägerblechs (14) durch Anstauchen von der Öffnungskante (15) der Durchgangsöffnung her erzeugt ist.

6. Metallische Flachdichtung nach Anspruch 2 oder 3,
dadurch **gekennzeichnet,**
daß der den freien Schenkel (32) der Sicke (12,13) abstützende Bereich des Trägerblechs (14) durch Fließpressen erzeugt ist.

7. Metallische Flachdichtung nach einem der vorhergehenden Ansprüche,
dadurch **gekennzeichnet,**
daß ein kopfseitiges und ein blockseitiges Dichtungs blech (10,11) mit jeweils einer Sicke (12 bzw. 13) vorhanden sind, und
daß die jeweils die freien Schenkel (9,9') der Sicken (12,13) abstützenden Bereiche des Trägerblechs (14) auf beiden Seiten des Trägerblechs (14) unterschiedlich sind.

8. Metallische Flachdichtung, insbesondere Zylinderkopfdichtung, mit einem gesickten Dichtungskörper, dessen Oberflächen zwei zueinander parallele Dichtflächen bilden, welche wenigstens eine Durchgangsöffnung umgeben,
dadurch **gekennzeichnet,**
daß der Bereich zwischen der Durchgangsöffnung und der Sicke (42) bezüglich des übrigen Bereichs dünner ausgebildet ist und eine topografisch frei gewählte Form und/oder verschiedene Breiten aufweist, und daß in diesem Bereich eine Auffütterung konstanter Dicke angeordnet ist.

9. Metallische Flachdichtung nach Anspruch 8,
dadurch **gekennzeichnet,**
daß die Auffütterung ein Schenkel eines Bördels(40), ein einstückig mit dem Dichtungskörper (39) ausgeformter Falz (41) oder eine eingesetzte Blechlage ist.

10. Metallische Flachdichtung nach einem der vorhergehenden Ansprüche,
dadurch **gekennzeichnet,**
daß die einzelnen Bleche (10,11,14,17,20) aus unterschiedlichen Werkstoffen bestehen.
